# EUROPEAN PATENT SPECIFICATION

(11) **EP 0 569 261 B1**
(45) Date of publication and mention of the grant of the patent: **06.08.1997**
(21) Application number: 93400822.8
(22) Date of filing: 30.03.1993
(51) Int. Cl.: G01V 1/20, B63G 8/42

(54) **Vibration isolation module**
Modul zur Schwingungsisolierung
Module d'isolation de vibration

(30) Priority: 08.05.1992 AU 2301/92
(43) Date of publication of application: 10.11.1993
(73) Proprietor: THOMSON MARCONI SONAR PTY LTD, Rydalmere, New South Wales 2116 (AU)
(72) Inventor: Carpenter, Allan Lloyd, F-92402 Courbevoie Cedex (FR); Adkins, Mark William, F-92402 Courbevoie Cedex (FR)
(74) Representative: Desperrier, Jean-Louis

(56) References cited:
- EP-A- 0 368 472
- FR-A- 2 626 051
- US-A- 3 437 171
- US-A- 4 628 851
- US-A- 4 736 345
- US-A- 5 062 085

## Description

### BACKGROUND OF THE INVENTION

This invention relates to the construction of Vibration Isolation Modules (VIM's) which are typically used either side of an acoustic aperture of a towed acoustic array to minimise performance degradation due to transmitted mechanical vibrations.

Conventional towed arrays have consisted of a towing cable (negatively buoyant to achieve submersion to the required depth), forward Vibration Isolation Modules (to minimise the transmission of mechanical vibration from the tow cable to the acoustic array), an array of acoustic (and non-acoustic) sensors, an aft VIM (to minimise transmission of vibration from the "flapping tail" forward to the acoustic array). To perform the required vibration isolation functions, the VIMS, like the suspension of a motor vehicle must not only provide elastic isolation (the spring function) but must also dissipate the produced vibration energy (the damping function).

In the past, VIM's have been constructed that have provided adequate elasticity, albeit for a limited range of tow loads and limited damping; their effectiveness has been limited, and restricted to a narrow range of operating conditions.

French patent 2 626 051 discloses such a VIM which has only external spirally wrapped sheets of yarns with an internal open space filed with a light liquid. US Patent 5 062 085 discloses also à VIM having central compliant core with a cord-like non extensible member wound about the core in helical fashion with at least pitch reversal .

US patent 4 736 345 discloses a streamer with spacers that are mechanically isolated from the hosewall and strain members by a compliant outer ring;

US patent 4 628 851 discloses a VIM having a central rope of aramide fibres enclosing a plurality of compliant members, two end caps, an external jacket and a filling fluid.

### BRIEF SUMMARY OF THE INVENTION

It is therefore an object of the present invention to provide a Vibration Isolation Module (VIM) which will overcome or at least reduce the limitations of current art.

Accordingly, the invention provides a Vibration Isolation Module (VIM) as claimed in the appended set of claims.

Thus, the measures here proposed increase both the elastic isolation and the damping and significantly extend the operating range of both tow speeds and vibrational frequency over which the VIM will provide effective operation.

### BRIEF DESCRIPTION OF THE DRAWINGS

Two embodiments of the invention will be described more fully, by way of example, with reference to the drawings, of which
Figure 1 schematically illustrates the "classical" implementation of the three aspects of the invention, by way of a longitudinal section through the module, and
Figure 2 schematically illustrates a preferred embodiment, by way of a longitudinal section through the module, whereby the "classical" viscous damping measure is replaced by a more cost effective solution.

### DETAILED DESCRIPTION

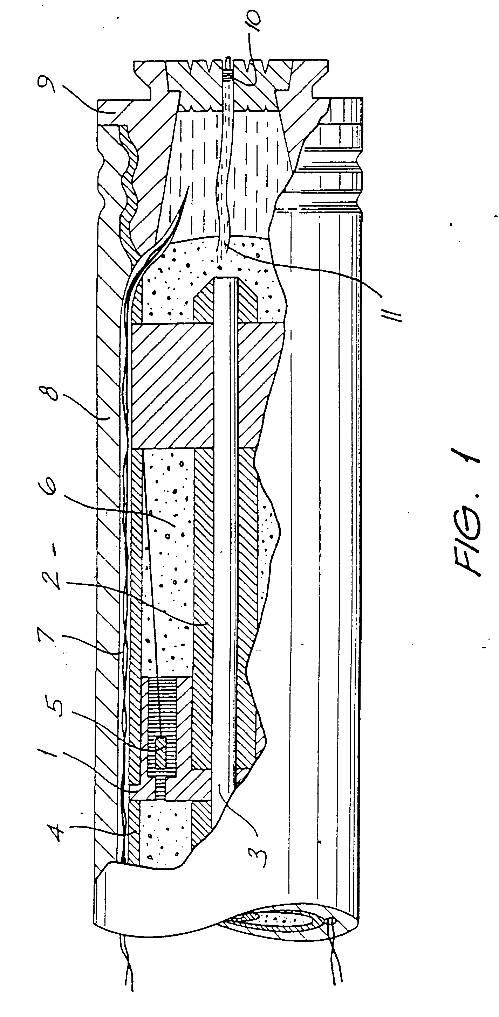

As shown in Figure 1, one aspect of the preferred embodiment involves the provision of cylindrical masses 1 attached at regular spacing to a central core of viscoelastic damping material 2, which may be extruded over a snubbed elastic strength member 3. Further snubbed elastic strength members 4 may be attached around the outer diameter of the masses 1. Viscous "dash-pot" type dampers 5 are installed within the masses 1. The space between the masses is filled with open cell plastic foam 6, around which is wrapped a layer of power and data cables 7. A jacket of damped thermoplastic 8 is extruded over this cable layer 7 and caps 9 containing a fluid filling valve 10 are attached at each end of the module, and the interior void is filled with a low density, high viscosity fluid 11.

In the repetitive cyclic extension, the multiple spring mass system as obtained provides vibration isolation, the cyclic distortion of the viscoelastic core provides low frequency damping, and the repetitive transfer of fill fluid through the "dash -pot" orifices provides the high frequency damping.

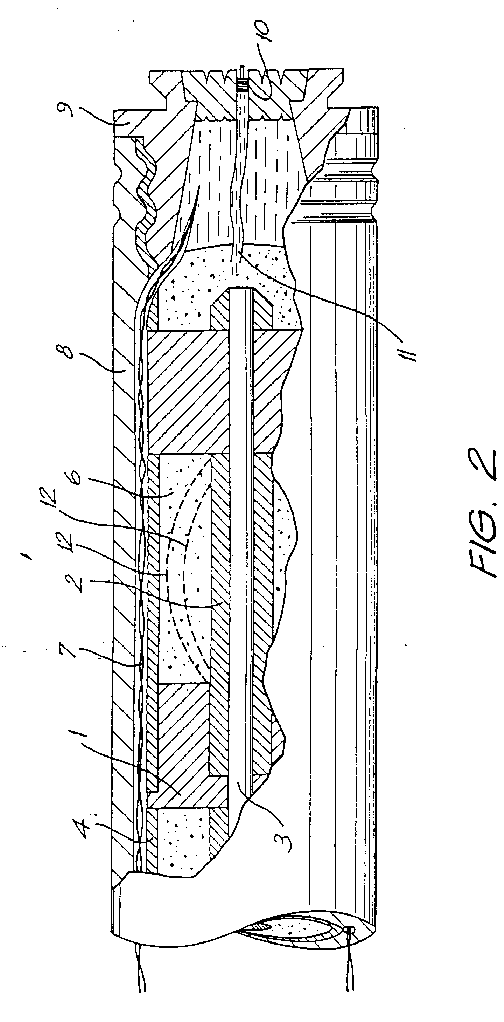

In an alternative preferred embodiment, is shown in Figure 2, the general arrangement is a before, except that the dash-pot dampers (item 5 of Figure 1) are removed. In their place is a braided flexible, open-weave stocking 12 which surrounds the open cell foam spacers 6, and is damped to the central core 2 by the masses 1. Under repetitive cyclic extension the braided stocking 12 pulls down, compressing the foam spacers and forcing fluid out through the foam pores. This action simulates that of the classic dashpot damper of the first embodiment, and hence provides the required visco damping : it is however, a much more cost-effective implementation.

The foregoing describes only some aspects of an embodiment of the present invention, and modifications, obvious to those skilled in the art, can be made thereto without departing from the scope of the present invention as claimed.

## Claims

1. A vibration isolation module as a part of a towed acoustic streamer, comprising a central elastic strength member (3), two end caps (9), an external jacket (8) forming with the end caps a fluid-tight enclosure, and a low density high viscosity fluid (11) filling this enclosure, characterised in that it further comprises a plurality of masses (1) pulled into said elastic strength member (3) for dividing the enclosure into a number of separated sub-enclosures, a central core (1) of visco-elastic damping material surrounding said elastic strength member and extending between said masses, a plurality of open cell foam spacers (6) filling voids in the reparate sub-enclosures, and viscous damping means (5) operating with said filling fluid.

2. A vibration isolation module as claimed in claim 1, characterised in that said viscous damping means are "dash-pot" type dampers (5) installed with said masses.

3. A vibration isolation module as claimed in claim 1, characterised in that said viscous damping means comprise an open-weave stocking (12) surrounding said open cell foam spacers and being damped to the central core by said masses.

4. A vibration isolation module as claimed in any one of claims 1 to 3, characterised in that it further comprises a plurality of elastic strength members (4) attached around the outer diameter of said masses.

## Patentansprüche

1. Vibrations-Isoliermodul als Teil einer geschleppten Sonaranordnung, der ein zentrales elastisches Zugglied (3), zwei Endkappen (9), und eine äußere Hülle (8) enthält, die mit den Kappen eine fluid-dichten Umhüllung bildet und mit einem hoch-viskosen Fluid (11) geringer Dichte gefüllt ist, dadurch gekennzeichnet, daß er weiter mehrere Massen (1) aufweist, die auf das elastische Zugglied (3 aufgezogen sind, um den Raum der Umhüllung in eine Anzahl von getrennten Teil-Räumen aufzuteilen, daß ein zentraler Kern (2) aus viskoelastischem Dämpfungsmaterial das elastische Zugglied umgibt und sich zwischen den Massen erstreckt, und daß mehrere Abstandshalter (6) aus offenporigem Schaum die Freiräume in den getrennten Teil-Räumen füllen und viskose Dämpfungsmittel (5) mit dem Füllfluid zusammenwirken.

2. Vibrations-Isoliermodul nach Anspruch 1, dadurch gekennzeichnet, daß die viskosen Dämpfungsmittel Stoßdämpfer (5) vom Dash-Pot-Typ sind, die in den Massen installiert sind.

3. Vibrations-Isoliermodul nach Anspruch 1, dadurch gekennzeichnet, daß die viskosen Dämpfungsmittel einen offengewirkten Strumpf (12) aufweisen, der die Abstandshalter aus offenporigem Schaum umgibt und gegen den zentralen Kern durch die Massen gedämpft wird.

4. Vibrations-Isoliermodul nach einem beliebigen der Ansprüche 1 bis 3, dadurch gekennzeichnet, daß er weiter mehrere elastische Zugglieder (4) aufweist, die um den Außenumfang der Massen herum befestigt sind.

## Revendications

1. Module d'isolement anti-vibratoire intégré à une antenne acoustique remorquée, comportant un élément de renforcement élastique central (3), deux bouchons d'extrémité (9), un gainage externe (8) constituant avec lesdits bouchons une capacité étanche; comportant en outre un fluide haute viscosité de faible densité (11) remplissant ladite capacité, plusieurs masses (2) associées avec ledit élément de renforcement élastique (3) afin de diviser la capacité en un certain nombre de sous-capacités séparées; et comportant de plus un noyau central (1) de matériau d'amortissement visco-élastique entourant ledit élément de renforcement élastique et se prolongeant entre lesdites masses, ainsi que plusieurs entretoises de mousse à alvéoles ouvertes (6) remplissant les vides dans les sous-capacités séparées et enfin un dispositif d'amortissement visqueux (5) coopérant avec ledit liquide de remplissage.

2. Module d'isolement anti-vibratoire selon la Revendication 1, caractérisé en ce que lesdits dispositifs d'amortissement visqueux sont de type amortisseurs à fluide (5) et qu'ils sont installés à l'intérieur desdites masses.

3. Module d'isolement anti-vibratoire selon la Revendication 1, caractérisé en ce que lesdits dispositifs d'amortissement anti-vibratoires comportent un manchon tressé ajouré (12) entourant lesdites entretoises en mousse à alvéoles ouvertes et qu'ils sont amortis par rapport audit noyau central via lesdites masses.

4. Module d'isolement anti-vibratoire selon les Revendications 1 et 3, caractérisé en ce qu'il comporte en outre plusieurs éléments de renforcement élastiques (4) disposés sur le diamètre externe desdites masses.
